# EUROPÄISCHE PATENTANMELDUNG

(11) **EP 4 015 187 A1**
(43) Veröffentlichungstag der Anmeldung: **22.06.2022**
(21) Anmeldenummer: 21214288.9
(22) Anmeldetag: 14.12.2021
(51) Int. Cl.: B29C 45/16, B60R 13/02, B29L 31/30

(54) **DURCHLEUCHTBARES VERKLEIDUNGSTEIL FÜR EIN KRAFTFAHRZEUG UND VERFAHREN ZUR HERSTELLUNG EINES DURCHLEUCHTBAREN VERKLEIDUNGSTEILS**

(30) Priorität: 18.12.2020 DE 102020134132
(71) Anmelder: REHAU Automotive SE & Co. KG, 95111 Rehau (DE)
(72) Erfinder: Fastner, Julian, 95030 Hof (DE); Löffler, Andreas, 95111 Rehau (DE); Reichstein, Johann, 95448 Bayreuth (DE)

(57) **Zusammenfassung**

Die vorliegende Erfindung betrifft ein durchleuchtbares Verkleidungsteil für ein Kraftfahrzeug umfassend einen lichtdurchlässigen Grundkörper (1) aus einem transluzenten oder transparenten Material, welches für Spektralbereiche des sichtbaren Lichts mit einer geringen Absorption durchstrahlbar ist, und wenigstens eine auf der der bestimmungsgemäßen Sichtseite (V) gegenüberliegenden Rückseite (R) des Grundkörpers (1) angeordnete Deckschicht (2), wobei die Deckschicht (2) eine Normalschichtdicke (X) hat, wobei die Deckschicht (2) aufgrund ihrer Normalschichtdicke (X) und des Deckschichtmaterials eine im Vergleich zu dem Material des Grundkörpers (1) hohe Absorption für Spektralbereiche des sichtbaren Lichts aufweist und hierdurch weitgehend lichtundurchlässig ist, wobei die Deckschicht (2) lokal definierte, schichtdickenreduzierte Bereiche (3) mit einer verbleibenden Restschichtdicke (Y) aufweist, wobei die Deckschicht (2) aufgrund der Schichtdickenreduktion in diesen Bereichen (3) für Spektralbereiche des sichtbaren Lichts mit einer geringen Absorption durchstrahlbar gemacht ist, sodass das Verkleidungsteil partiell durchleuchtbar ist, wobei der Grundkörper (1) in einem Spritzgussverfahren aus dem transluzenten oder transparenten Material hergestellt ist, wobei die Deckschicht (2) ebenfalls in einem Spritzgussverfahren aus dem Deckschichtmaterial hergestellt ist und der Grundkörper (1) und die Deckschicht (2) stoffschlüssig miteinander verbunden sind.

## Beschreibung

Die vorliegende Erfindung betrifft ein durchleuchtbares Verkleidungsteil für ein Kraftfahrzeug umfassend einen lichtdurchlässigen Grundkörper aus einem transluzenten oder transparenten Material, welches für Spektralbereiche des sichtbaren Lichts mit einer geringen Absorption durchstrahlbar ist, und wenigstens eine auf der der bestimmungsgemäßen Sichtseite gegenüberliegenden Rückseite des Grundkörpers angeordnete Deckschicht, wobei die Deckschicht eine Normalschichtdicke hat, wobei die Deckschicht aufgrund ihrer Normalschichtdicke und des Schichtmaterials eine im Vergleich zu dem Material des Grundkörpers hohe Absorption für Spektralbereiche des sichtbaren Lichts aufweist und hierdurch weitgehend lichtundurchlässig ist. Teil der Erfindung ist ferner ein Verfahren zur Herstellung eines durchleuchtbaren Verkleidungsteils.

Ein gattungsgemäßes Verkleidungsteil für ein Kraftfahrzeug und ein Verfahren zu dessen Herstellung kann der DE 10 2012 003 200 A1 entnommen werden.

Hauptproblematik bei der Herstellung von durchleuchtbaren Verkleidungsteilen gemäß dem Stand der Technik ist die Tatsache, dass zur Durchstrahlbarkeit der Beschichtung Perforationen durch zum Beispiel einen Laserstrahl ausgebildet werden. Diese Perforationen gehen jedoch durch die komplette Beschichtung hindurch, sodass bei ausgeschalteter rückwärtiger Beleuchtung tagsüber die Perforationen auf der Sichtseite erkennbar sind, oder aber die Perforationen im Durchmesser so klein ausgeführt werden müssen, dass großflächige durchstrahlbare Bereiche nicht realisierbar sind und vor allem die Perforationen versiegelt und vor einem Verschluss mit Schmutzpartikel geschützt werden müssen.

Die Erfindung stellt sich daher die Aufgabe ein Verkleidungsteil mit den eingangs beschriebenen Merkmalen und ein Verfahren zu dessen Herstellung anzugeben, das gegenüber dem Stand der Technik eine verbesserte Nicht-Sichtbarkeit der partiell durchleuchtbaren Bereiche des Verkleidungsteils aufweist.

Erfindungsgemäß wird diese Aufgabe gelöst durch ein durchleuchtbares Verkleidungsteil für ein Kraftfahrzeug umfassend:
- einen lichtdurchlässigen Grundkörper aus einem transluzenten oder transparenten Material, welches für Spektralbereiche des sichtbaren Lichts mit einer geringen Absorption durchstrahlbar ist, und
- wenigstens eine auf der der bestimmungsgemäßen Sichtseite gegenüberliegenden Rückseite des Grundkörpers angeordnete Deckschicht, wobei die Deckschicht eine Normalschichtdicke hat,
wobei die Deckschicht aufgrund ihrer Normalschichtdicke und des Deckschichtmaterials eine im Vergleich zu dem Material des Grundkörpers hohe Absorption für Spektralbereiche des sichtbaren Lichts aufweist und hierdurch weitgehend lichtundurchlässig ist, wobei die Deckschicht lokal definierte, schichtdickenreduzierte Bereiche mit einer verbleibenden Restschichtdicke aufweist, wobei die Deckschicht aufgrund der Schichtdickenreduktion in diesen Bereichen für Spektralbereiche des sichtbaren Lichts mit einer geringen Absorption durchstrahlbar gemacht ist, sodass das Verkleidungsteil partiell durchleuchtbar ist, wobei der Grundkörper in einem Spritzgussverfahren aus dem transluzenten oder transparenten Material hergestellt ist, wobei die Deckschicht ebenfalls in einem Spritzgussverfahren aus dem Deckschichtmaterial hergestellt ist und der Grundkörper und die Deckschicht stoffschlüssig miteinander verbunden sind.

Der Grundkörper und die Deckschicht sind bevorzugt mittels eines Mehrkomponenten-Spritzgussverfahrens stoffschlüssig miteinander verbunden.

Der Grundkörper ist bevorzugt dreidimensional geformten. Der Grundkörper ist also bevorzugt in alle Raumrichtungen gekrümmt und nicht allein flach in nur zwei Raumrichtungen geformt.

Das transluzente oder transparente Material des Grundkörpers kann mit einem faserförmigen und/oder nadelförmigen Füllstoff verstärkt sein. Es hat sich gezeigt, dass über die Morphologie des Füllstoffs eine geringe Absorption für Spektralbereiche des sichtbaren Lichts in dem transluzenten oder transparenten Material des Grundkörpers realisiert werden kann. Gleichzeitig erlaubt der Einsatz eines Füllstoffs ein Material anzugeben dass eine geringe Wärmeausdehnung und eine hohe Schlagzähigkeit aufweist. Der Füllstoff kann Wollastonit und/oder armorphes Siliziumdioxid und/oder Cristobalit und/oder Feldspat und/oder Quarzgut und/oder Glas und/oder Glasfasern umfassen. Insbesondere faserförmiges und/oder nadelförmiges Wollastonit hat sich als bevorzugt geeignet erwiesen. Der Füllstoffgehalt des Füllstoffs in dem transluzenten oder transparenten Material des Grundkörpers weißt bevorzugt einen Wert von 10 Vol.% bis 30 Vol.%, weiter bevorzugt von 15 Vol.% bis 20 Vol.% auf. Vorstehende Wertebereiche stellen das Optimum zwischen geringe Absorption für Spektralbereiche des sichtbaren Lichts und gleichzeitig ausreichend geringer Wärmeausdehnung und hoher Schlagzähigkeit dar.

Auf der bestimmungsgemäßen Sichtseite des Grundkörpers kann eine zusätzliche Schutzschicht vorgesehen sein, wobei die zusätzliche Schutzschicht insbesondere ein Silan oder eine Silanverbindung umfassen kann. Die Schutzschicht kann insbesondere gegen Verkratzungen oder Beschädigungen durch Partikel (Sande oder Reifenabrieb) schützen. Alternativ oder zusätzlich kann die Schutzschicht einen herkömmlichen bei der Lackierung von Verkleidungsteilen eingesetzten Klarlack umfassen. Die Schutzschicht weist bevorzugt ebenfalls eine geringe Absorption für Spektralbereiche des sichtbaren Lichts auf. Die Schutzschicht weißt bevorzugt eine Schutzschichtdicke von 3 µm bis 1500 µm auf.

Das transluzente oder transparente Material des Grundkörpers kann bevorzugt Polypropylen und/oder Polycarbonat und/oder Polyethylenterephthalat und/oder Acrylnitril-Butadien-Styrol und/oder Polymethylmethacrylat und/oder Polyamid enthalten oder hieraus gebildet sein.

Die Restschichtdicke liegt bevorzugt im Bereich von 30 µm bis 500 µm, weiter bevorzugt im Bereich von 40 µm bis 300 µm, besonders bevorzugt im Bereich von 50 µm bis 200 µm.

Der Grundkörper weist bevorzugt eine Wandstärke im Bereich von 0,6 mm bis 4 mm auf.

Das durchleuchtbare Verkleidungsteil kann eine Stoßfängerverkleidung oder eine Heckklappenverkleidung oder eine Säulenverkleidung oder eine Türverkleidung oder eine Kotflügelverkleidung oder eine Dachverkleidung oder eine Kühlerverkleidung oder ein Spoiler oder eine Kühlerverkleidung eines Kraftfahrzeuges, oder ein Bauteil der vorgenannten Teile oder eine Baugruppe der vorgenannten Teile oder ein Bestandteil der vorgenannten Teile sein.

Das durchleuchtbare Verkleidungsteil kann insbesondere ein Außenverkleidungsteil einer Kraftfahrzeugkarosserie sein, nämlich eine Stoßfängerverkleidung oder eine Heckklappenverkleidung oder eine Säulenverkleidung oder eine Türverkleidung oder eine Kotflügelverkleidung oder eine Dachverkleidung oder eine Kühlerverkleidung oder ein Spoiler oder eine Kühlerverkleidung eines Kraftfahrzeuges, oder ein Bauteil der vorgenannten Teile oder eine Baugruppe der vorgenannten Teile oder ein Bestandteil der vorgenannten Teile sein.

Teil der Erfindung ist ferner ein System aus einem wie vorstehend beschriebenen durchleuchtbaren Verkleidungsteil und einem hinter der bestimmungsgemäßen Sichtseite des Grundkörpers angeordneten Leuchtelement. Das Leuchtelement kann wenigstens eine Leuchtdiode und/oder eine Lichtsammellinse umfassen.

Das Leuchtelement weist bevorzugt eine Mindestleuchtstärke von 500 cd/m² auf.

Die Erfindung betrifft ferner ein Verfahren zur Herstellung eines durchleuchtbaren Verkleidungsteils, insbesondere eines vorstehend beschriebenen Verkleidungsteils, für ein Kraftfahrzeug, mit:
- einem lichtdurchlässigen Grundkörper aus einem transluzenten oder transparenten Material, welches für Spektralbereiche des sichtbaren Lichts mit einer geringen Absorption durchstrahlbar ist, und mit
- wenigstens einer auf der der bestimmungsgemäßen Sichtseite gegenüberliegenden Rückseite des Grundkörpers angeordneten Deckschicht, wobei die Deckschicht eine Normalschichtdicke hat,

wobei die Deckschicht aufgrund ihrer Normalschichtdicke und des Deckschichtmaterials eine im Vergleich zu dem Material des Grundkörpers hohe Absorption für Spektralbereiche des sichtbaren Lichts aufweist und hierdurch weitgehend lichtundurchlässig ist,
dadurch gekennzeichnet, dass das Verfahren die folgenden Schritte umfasst:
   - Spritzgießen des Grundkörpers,
   - Spritzgießen der Deckschicht,
   - Stoffschlüssiges Verbinden der Deckschicht mit der Rückseite des Grundkörpers,
wobei das stoffschlüssige Verbinden erfolgt, indem
   a) zunächst der Grundkörper spritzgegossen wird und die Deckschicht durch Anspritzen eines die Deckschicht bildenden Deckschichtmaterials in einem Spritzgussverfahren mit dem aus dem transluzenten oder transparenten Material gebildeten Grundkörper stoffschlüssig verbunden wird, oder
   b) zunächst die Deckschicht spritzgegossen wird und der Grundkörper durch Anspritzen eines den Grundkörper bildenden transluzenten oder transparenten Materials in einem Spritzgussverfahren mit der aus dem Deckschichtmaterial gebildeten Deckschicht stoffschlüssig verbunden wird.

Das stoffschlüssige Verbinden kann mittels eines Mehrkomponenten-Spritzgussverfahrens erfolgen.

Das Mehrkomponenten-Spritzgussverfahren in Variante a) kann ohne vollständiges Entformen des Grundkörpers oder kann in Variante b) ohne vollständiges Entformen der Deckschicht durchgeführt werden.

Das Deckschichtmaterial der Deckschicht kann das gleiche Material ist wie das transluzente oder transparente Material des Grundkörpers sein, jedoch abweichend mit Zusätzen versehen sein, die eine hohe Absorption für Spektralbereiche des sichtbaren Lichts bewirken. Dies können beispielsweise Russpartikel, Kreidepartikel, Farbpigmente oder Metallpartikel sein.

Im Folgenden wird die Erfindung anhand einer lediglich ein Ausführungsbeispiel darstellenden Zeichnung erläutert. Es zeigen schematisch:
- Fig. 1:: eine dreidimensionale Darstellung eines erfindungsgemäßen durchleuchtbaren Verkleidungsteils, wobei ein hinter der Sichtseite angeordnetes Leuchtelement nicht aktiviert ist;
- Fig. 2:: eine weitere dreidimensionale Darstellung des erfindungsgemäßen durchleuchtbaren Verkleidungsteils aus Fig. 1, wobei ein hinter der Sichtseite angeordnetes Leuchtelement aktiviert ist;
- Fig. 3:: eine Schnittdarstellung durch das erfindungsgemäße Verkleidungsteil aus Fig. 2 gemäß der dortigen Schnittlinie A - A.

In den Figuren werden gleiche oder funktionsgleiche Elemente mit den gleichen Bezugszeichen versehen.

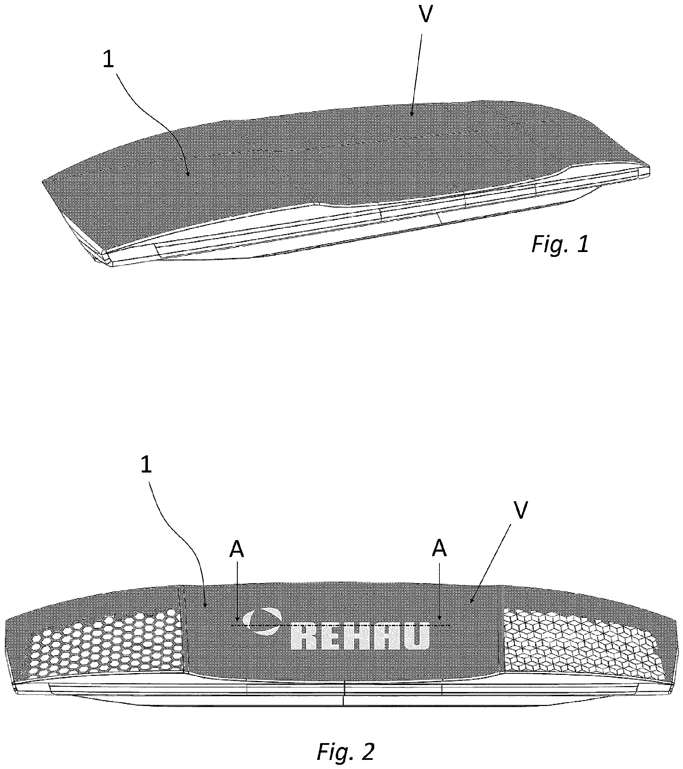

In der Fig. 1 ist eine dreidimensionale Darstellung eines erfindungsgemäßen durchleuchtbaren Verkleidungsteils dargestellt, wobei ein hinter der Sichtseite V angeordnetes Leuchtelement 5 nicht aktiviert ist. Das durchleuchtbare Verkleidungsteil für ein Kraftfahrzeug umfasst einen dreidimensional geformten, lichtdurchlässigen Grundkörper 1 aus einem transluzenten oder transparenten Material, welches für Spektralbereiche des sichtbaren Lichts mit einer geringen Absorption durchstrahlbar ist.

In der Fig. 2 ist eine weitere dreidimensionale Darstellung des erfindungsgemäßen durchleuchtbaren Verkleidungsteils aus Fig. 1 dargestellt, wobei ein hinter der Sichtseite V angeordnetes Leuchtelement 5 aktiviert ist. Durch die Hinterleuchtung des Grundkörpers 1 werden dekorative Strukturierungen und ein Schriftzug erkennbar, die bei nicht aktivierter Hinterleuchtung von der Sichtseite V aus nicht erkennbar sind.

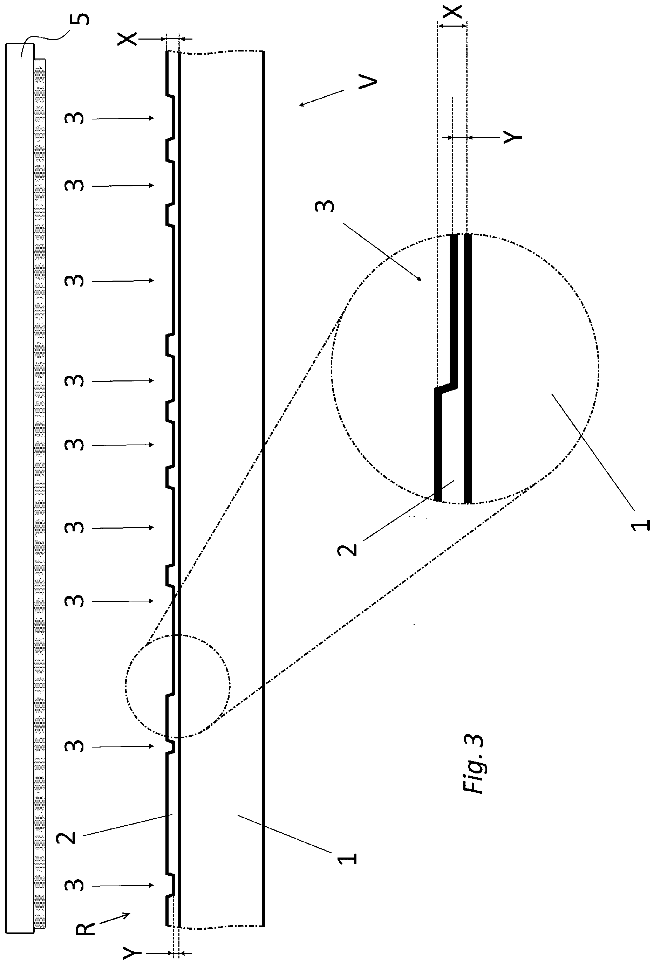

In der Fig. 3 ist eine Schnittdarstellung durch das erfindungsgemäße Verkleidungsteil aus Fig. 2 gemäß der dortigen Schnittlinie A - A dargestellt. Das dort gezeigte durchleuchtbare Verkleidungsteil für ein Kraftfahrzeug umfasst:
- einen lichtdurchlässigen Grundkörper 1 aus einem transluzenten oder transparenten Material, welches für Spektralbereiche des sichtbaren Lichts mit einer geringen Absorption durchstrahlbar ist, und
- wenigstens eine auf der der bestimmungsgemäßen Sichtseite V gegenüberliegenden Rückseite R des Grundkörpers 1 angeordnete Deckschicht 2, wobei die Deckschicht 2 eine Normalschichtdicke X hat,
wobei die Deckschicht 2 aufgrund ihrer Normalschichtdicke X und des Deckschichtmaterials eine im Vergleich zu dem Material des Grundkörpers 1 hohe Absorption für Spektralbereiche des sichtbaren Lichts aufweist und hierdurch weitgehend lichtundurchlässig ist.

Die Deckschicht 2 weist lokal definierte, schichtdickenreduzierte Bereiche 3 mit einer verbleibenden Restschichtdicke Y auf, wobei die Deckschicht 2 aufgrund der Schichtdickenreduktion in diesen Bereichen 3 für Spektralbereiche des sichtbaren Lichts mit einer geringen Absorption durchstrahlbar gemacht ist, sodass das Verkleidungsteil partiell durchleuchtbar ist. Der Grundkörper 1 ist in einem Spritzgussverfahren aus dem transluzenten oder transparenten Material hergestellt ist, wobei die Deckschicht 2 ebenfalls in einem Spritzgussverfahren aus dem Deckschichtmaterial hergestellt ist und der Grundkörper 1 und die Deckschicht 2 stoffschlüssig miteinander verbunden sind.

Der Grundkörper 1 und die Deckschicht 2 sind mittels eines Mehrkomponenten-Spritzgussverfahrens stoffschlüssig miteinander verbunden.

Die Restschichtdicke liegt im Bereich von 30 µm bis 500 µm, weiter bevorzugt im Bereich von 40 µm bis 300 µm, besonders bevorzugt im Bereich von 50 µm bis 200 µm.

Der Grundkörper 1 weist eine Wandstärke im Bereich von 0,6 mm bis 4 mm auf.

Das dargestellte durchleuchtbare Verkleidungsteil ist ein Spoiler eines Kraftfahrzeuges. Das Verkleidungsteil kann alternativ insbesondere auch eine Stoßfängerverkleidung oder eine Heckklappenverkleidung oder eine Säulenverkleidung oder eine Türverkleidung oder eine Kotflügelverkleidung oder eine Dachverkleidung oder eine Kühlerverkleidung eines Kraftfahrzeuges, oder ein Bauteil der vorgenannten Teile oder eine Baugruppe der vorgenannten Teile oder ein Bestandteil der vorgenannten Teile sein.

In der Fig. 3 ist auch das erfindungsgemäße System aus einem durchleuchtbaren Verkleidungsteil nach einem der vorstehenden Ansprüche und einem hinter der bestimmungsgemäßen Sichtseite V des Grundkörpers 1 angeordneten Leuchtelement 5 dargestellt.

Ein Verfahren zur Herstellung eines durchleuchtbaren Verkleidungsteils für ein Kraftfahrzeug, insbesondere eines Verkleidungsteils wie vorstehend beschrieben, mit:
- einem lichtdurchlässigen Grundkörper 1 aus einem transluzenten oder transparenten Material, welches für Spektralbereiche des sichtbaren Lichts mit einer geringen Absorption durchstrahlbar ist, und mit
- wenigstens einer auf der der bestimmungsgemäßen Sichtseite V gegenüberliegenden Rückseite R des Grundkörpers 1 angeordneten Deckschicht 2, wobei die Deckschicht 2 eine Normalschichtdicke X hat,

wobei die Deckschicht 2 aufgrund ihrer Normalschichtdicke X und des Deckschichtmaterials eine im Vergleich zu dem Material des Grundkörpers 1 hohe Absorption für Spektralbereiche des sichtbaren Lichts aufweist und hierdurch weitgehend lichtundurchlässig ist,
umfasst die folgenden Schritte:
   - Spritzgießen des Grundkörpers 1,
   - Spritzgießen der Deckschicht 2,
   - Stoffschlüssiges Verbinden der Deckschicht 2 mit der Rückseite R des Grundkörpers 1,
wobei das stoffschlüssige Verbinden erfolgt, indem
   a) zunächst der Grundkörper 1 spritzgegossen wird und die Deckschicht 2 durch Anspritzen eines die Deckschicht 2 bildenden Deckschichtmaterials in einem Spritzgussverfahren mit dem aus dem transluzenten oder transparenten Material gebildeten Grundkörper 1 stoffschlüssig verbunden wird, oder
   b) zunächst die Deckschicht 2 spritzgegossen wird und der Grundkörper 1 durch Anspritzen eines den Grundkörper 1 bildenden transluzenten oder transparenten Materials in einem Spritzgussverfahren mit der aus dem Deckschichtmaterial gebildeten Deckschicht 2 stoffschlüssig verbunden wird.

Das stoffschlüssige Verbinden kann hierbei insbesondere mittels eines Mehrkomponenten-Spritzgussverfahrens erfolgen.

Das Mehrkomponenten-Spritzgussverfahren kann in Variante a) ohne vollständiges Entformen des Grundkörpers 1 oder kann in Variante b) ohne vollständiges Entformen der Deckschicht 2 durchgeführt werden.

## Patentansprüche

1. Durchleuchtbares Verkleidungsteil für ein Kraftfahrzeug umfassend:
- einen lichtdurchlässigen Grundkörper (1) aus einem transluzenten oder transparenten Material, welches für Spektralbereiche des sichtbaren Lichts mit einer geringen Absorption durchstrahlbar ist, und
- wenigstens eine auf der der bestimmungsgemäßen Sichtseite (V) gegenüberliegenden Rückseite (R) des Grundkörpers (1) angeordnete Deckschicht (2), wobei die Deckschicht (2) eine Normalschichtdicke (X) hat,
wobei die Deckschicht (2) aufgrund ihrer Normalschichtdicke (X) und des Deckschichtmaterials eine im Vergleich zu dem Material des Grundkörpers (1) hohe Absorption für Spektralbereiche des sichtbaren Lichts aufweist und hierdurch weitgehend lichtundurchlässig ist,
**dadurch gekennzeichnet, dass**
die Deckschicht (2) lokal definierte, schichtdickenreduzierte Bereiche (3) mit einer verbleibenden Restschichtdicke (Y) aufweist, wobei die Deckschicht (2) aufgrund der Schichtdickenreduktion in diesen Bereichen (3) für Spektralbereiche des sichtbaren Lichts mit einer geringen Absorption durchstrahlbar gemacht ist, sodass das Verkleidungsteil partiell durchleuchtbar ist,
wobei der Grundkörper (1) in einem Spritzgussverfahren aus dem transluzenten oder transparenten Material hergestellt ist,
wobei die Deckschicht (2) ebenfalls in einem Spritzgussverfahren aus dem Deckschichtmaterial hergestellt ist und der Grundkörper (1) und die Deckschicht (2) stoffschlüssig miteinander verbunden sind.

2. Durchleuchtbares Verkleidungsteil für ein Kraftfahrzeug, **dadurch gekennzeichnet, dass** der Grundkörper (1) und die Deckschicht (2) mittels eines Mehrkomponenten-Spritzgussverfahrens stoffschlüssig miteinander verbunden sind.

3. Durchleuchtbares Verkleidungsteil nach Anspruch 1 oder 2, **dadurch gekennzeichnet, dass** die Restschichtdicke im Bereich von 30 µm bis 500 µm, weiter bevorzugt im Bereich von 40 µm bis 300 µm, besonders bevorzugt im Bereich von 50 µm bis 200 µm liegt.

4. Durchleuchtbares Verkleidungsteil nach einem der vorstehenden Ansprüche, **dadurch gekennzeichnet, dass** der Grundkörper (1) eine Wandstärke im Bereich von 0,6 mm bis 4 mm aufweist.

5. Durchleuchtbares Verkleidungsteil nach einem der vorstehenden Ansprüche, **dadurch gekennzeichnet, dass** das durchleuchtbare Verkleidungsteil eine Stoßfängerverkleidung oder eine Heckklappenverkleidung oder eine Säulenverkleidung oder eine Türverkleidung oder eine Kotflügelverkleidung oder eine Dachverkleidung oder eine Kühlerverkleidung oder ein Spoiler eines Kraftfahrzeuges, oder ein Bauteil der vorgenannten Teile oder eine Baugruppe der vorgenannten Teile oder ein Bestandteil der vorgenannten Teile ist.

6. System aus einem durchleuchtbaren Verkleidungsteil nach einem der vorstehenden Ansprüche und einem hinter der bestimmungsgemäßen Sichtseite (V) des Grundkörpers (1) angeordneten Leuchtelement (5).

7. Verfahren zur Herstellung eines durchleuchtbaren Verkleidungsteils für ein Kraftfahrzeug, insbesondere eines Verkleidungsteils nach einem der Ansprüche 1 bis 5, mit:
- einem lichtdurchlässigen Grundkörper (1) aus einem transluzenten oder transparenten Material, welches für Spektralbereiche des sichtbaren Lichts mit einer geringen Absorption durchstrahlbar ist, und mit
- wenigstens einer auf der der bestimmungsgemäßen Sichtseite (V) gegenüberliegenden Rückseite (R) des Grundkörpers (1) angeordneten Deckschicht (2), wobei die Deckschicht (2) eine Normalschichtdicke (X) hat,
wobei die Deckschicht (2) aufgrund ihrer Normalschichtdicke (X) und des Deckschichtmaterials eine im Vergleich zu dem Material des Grundkörpers (1) hohe Absorption für Spektralbereiche des sichtbaren Lichts aufweist und hierdurch weitgehend lichtundurchlässig ist,
**dadurch gekennzeichnet, dass** das Verfahren die folgenden Schritte umfasst:
- Spritzgießen des Grundkörpers (1),
- Spritzgießen der Deckschicht (2),
- Stoffschlüssiges Verbinden der Deckschicht (2) mit der Rückseite (R) des Grundkörpers (1),
wobei das stoffschlüssige Verbinden erfolgt, indem
a) zunächst der Grundkörper (1) spritzgegossen wird und die Deckschicht (2) durch Anspritzen eines die Deckschicht (2) bildenden Deckschichtmaterials in einem Spritzgussverfahren mit dem aus dem transluzenten oder transparenten Material gebildeten Grundkörper (1) stoffschlüssig verbunden wird, oder
b) zunächst die Deckschicht (2) spritzgegossen wird und der Grundkörper (1) durch Anspritzen eines den Grundkörper (1) bildenden transluzenten oder transparenten Materials in einem Spritzgussverfahren mit der aus dem Deckschichtmaterial gebildeten Deckschicht (2) stoffschlüssig verbunden wird.

8. Verfahren zur Herstellung eines durchleuchtbaren Verkleidungsteils für ein Kraftfahrzeug nach Anspruch 7, **dadurch gekennzeichnet, dass** das stoffschlüssige Verbinden mittels eines Mehrkomponenten-Spritzgussverfahrens erfolgt.

9. Verfahren zur Herstellung eines durchleuchtbaren Verkleidungsteils für ein Kraftfahrzeug nach Anspruch 8, **dadurch gekennzeichnet, dass** das Mehrkomponenten-Spritzgussverfahren in Variante a) ohne vollständiges Entformen des Grundkörpers (1) oder in Variante b) ohne vollständiges Entformen der Deckschicht (2) durchgeführt wird.

10. Verfahren zur Herstellung eines durchleuchtbaren Verkleidungsteils für ein Kraftfahrzeug nach einem der Ansprüche 7 bis 9, **dadurch gekennzeichnet, dass** Deckschichtmaterial der Deckschicht (2) das gleiche Material ist wie das transluzente oder transparente Material des Grundkörpers (1), jedoch abweichend mit Zusätzen versehen ist, die eine hohe Absorption für Spektralbereiche des sichtbaren Lichts bewirken.
